# EUROPEAN PATENT APPLICATION

(11) **EP 1 517 267 A1**
(43) Date of publication of application: **23.03.2005**
(21) Application number: 03292315.3
(22) Date of filing: 19.09.2003
(51) Int. Cl.: G06K 19/077

(54) **Dual interface card**

(71) Applicant: Axalto S.A., 92120 Montrouge (FR)
(72) Inventor: Reignoux, Yves Schlumberger Systémes, 92120 Montrouge (FR); Thevenot, Benoit Schlumberger Systémes, 92120 Montrouge (FR); Bugat, Gabrielle Schlumberger Systémes, 92120 Montrouge (FR); Tresca, Ignacio Schlumberger Systémes, 92120 Montrouge (FR)
(74) Representative: Cassagne, Philippe M.J.

(57) **Abstract**

Card of the dual type interface type comprises a card body (1) having a front side (2) and a back side (3), at least one electronic element (4) embedded in the card body, contact area (5) connected to electronic element through connector pads (6). The contact area is even with card body front side. The connector pads are embedded in the card body. The card body back side comprises at least one hole (7) for connecting an antenna to the electronic element.

## Description

### Field of the invention

The invention relates to so-called hybrid or dual interface cards used for mobile telephones contact-less applications.

### Background of the invention

Smart card with dual mode capability are multi-usage cards offering both local and remote services.
A local service is for example a contact-less transaction. A remote service is for example a mobile transaction. Mobile operators subscribers use such a card (Subscriber Identity Module SIM card) for phone calls, ticketing (transport, ticket-less travel), payment (banking, e-purse, e-transaction), identification (security, building and office access), loyalty programs and other services to come. Eventually, the smart card -combined with new handset- provides a convenient and user-friendly replacement for many of the cards that customers currently have in their wallets.
Such a smart card has multi-functional architecture, hosting a RF (radio-frequency) standards-based contact-less chip, enabling the combination of mobile telecommunication features for voice and data transmissions with contact-less features for local services.
Hybrid or dual interface cards need an external RF contact-less antenna to be able to use the contact-less capabilities. This antenna is currently in the handset and connects to the card through specific connectors.
Thus there is a current need for extending this concept to existing GSM handsets that doesn't have a built-in contact-less antenna, but are compatible with the hybrid or dual interface cards.

### Object and summary of the invention

Therefore it is an object of the present invention to provide a dual interface type card and method for manufacturing such a card that overcomes the at least one shortcoming of the prior art cards.

According to the invention, the card of the dual interface type comprises a card body having a front side and a back side, at least one electronic element embedded in the card body, contact area connected to said electronic element through connector pads, said contact area being even with card body front side and the connector pads being embedded in the card body, wherein the card body back side comprises at least one hole.
Alternatively, a metallic track can connected to the connector pads or to the contact area. The metallic track is placed apart, on a deported location.
An antenna is connected to the electronic element via the connector pads, or via the contact area back side, or via the metallic track through the at least one hole.
The antenna is made of a conductive material laid on a flexible film. The flexible film is made of a thin plastic material.

The kit composed of the SIM card and the antenna connected to the SIM cards is easy to implement from a manufacturing point of view. It is based on an existing product and just requires a couple of simple manufacturing operations. It can be very easily adapted and inserted in existing GSM handsets without any modification of the handsets.

Other characteristics and advantages of the invention will be described in more detailed in the following description of the invention and in one practical example of application.

### Brief description of the drawings

The following detailed description, given by way of example, will be best understood with the accompanying drawings in which :
- Figure 1 represents a SIM card on an ISO card body with an attached RF antenna on the rear side of the ISO card body according to the invention,
- Figure 2 shows the front side of a known SIM card;
- Figure 3.A and 3.B show a cut into the SIM card of Figure 2, representing schematically two different embodiments of the card according to the invention,
- Figure 4 represents the antenna on a supporting film,
- Figure 5 shows the rear side of an unplugged SIM card with a connected RF antenna according to the invention,
- Figure 6 shows a cut into the SIM card of Figure 2, representing schematically an alternative to the two embodiments of the card of Figures 3.

### Detailed description of the invention

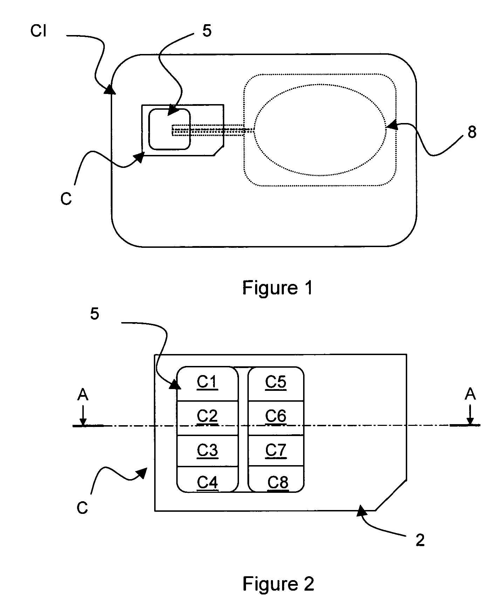

Figure 1 represents schematically a SIM card C on an ISO card body Cl with an attached RF antenna 8. The antenna 8 on its support (all in dashed) is connected to the SIM card C on the rear side of the ISO card body according to the invention.
The SIM card C can be unplugged from the ISO card body Cl as shown on Figure 2. The front side 2 of the SIM card comprises contact area 5. The contact area 5 comprises 8 standardized contacts C1, C2, ... C8 (ISO 7816 contacts) so that when the SIM card is inserted in the dedicated place of an handset, it authenticates and allows mobile operators subscribers to have access to mobile operator telecommunication networks for phone calls and other kind of services.

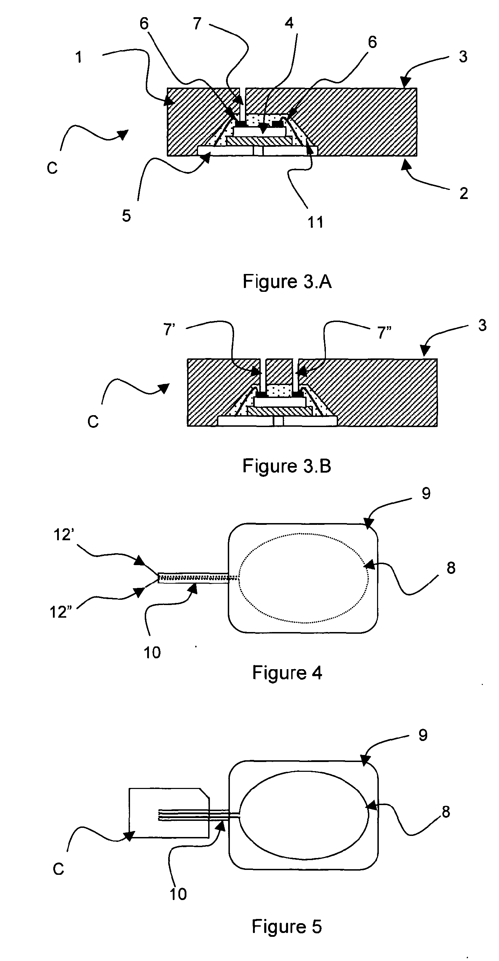

Figure 3.A and 3.B show a cut into the SIM card of Figure 2.
Figure 3.A represents a first embodiment of the card according to the invention.
The card C comprises a card body 1 having a front side 2 and a back side 3. There is at least one electronic element 4, for example an integrated circuit embedded in the card body 1. The contact area 5 of Figure 2 are connected to the electronic element through connector pads 6. The contact area is even with the card body front side. The connector pads 6 are embedded in the card body 1, more precisely (in the particular example shown on Figure 3) in a resin filling a cavity 11 of the card body in which the electronic element is embedded. According to the first embodiment of the invention, the card body back side 3 comprises one hole 7. This blind hole liberates an access to the connector pads 6.
Figure 3.B represents a second embodiment of the card C according to the invention. According to the second embodiment of the invention, the card body back side 3 comprises two holes 7' and 7". These blind holes liberate accesses to the connector pads 6.

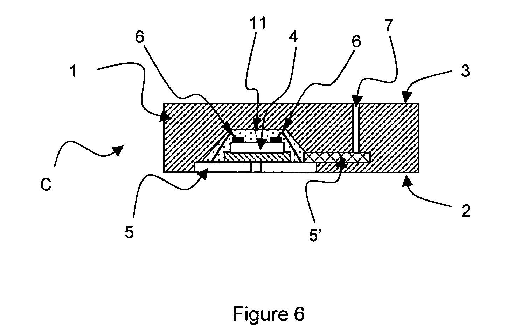

Figure 6 shows an alternative to the two embodiments of the card presented in relation with Figures 3.A and 3.B. A metallic track 5' either connected to the connector pads 6 or to the contact area 5 is placed apart, on a deported location.
This particular embodiments simplify the drilling operation in the sense that only the plastic of the card body 1 is to be drilled and not the card body and the resin 11. Also, the thickness of the metallic track 5' is important enough relatively to the connector pads 6 so that it reduces electronic elements deterioration risk during the drilling operation of the blind holes 7.

Figure 6 shows a particular embodiment with one hole 7, but one can easily adapt the this alternative with the embodiment of Figure 3.B comprising two holes 7 and 7" and two metallic tracks (not represented).

Figure 4 represents the antenna coil 8 on a supporting film 9 and 10. The antenna is made of a conductive material advantageously laid on a flexible supporting film 9 and 10. The conductive material can be laid, wired, etched or printed on the flexible film. The supporting film comprises a broad part 9 and a narrow part 10. The antenna coil 8 is supported by the broad part. On and at the end of the narrow part, the antenna comprises thin antenna connectors 12', 12". The antenna connectors are connected to the electronic element 4 via the connector pads 6 through the hole 7 or through the holes 7' and 7".
As an example, the flexible film is made of a thin plastic material.
Figure 5 shows the rear side of an unplugged SIM card C with a connected RF antenna 8, 9, 10 according to the invention. The kit consisting of the SIM card and its connected free antenna forms a package that is to be detached from the ISO card Cl to be installed in the telephone handset. As an alternative, the kit may also include a hollowed cap (not shown) that is aimed at replacing the original cap of the handset in case this cap does not give enough room between the antenna and the metallic parts of the handset (battery, printed circuit...) and therefore makes the contact-less coupling impossible.

In the embodiments with 2 holes, the antenna is connected to two connector pads 6, said pads being connected to contacts C4 and C5 and corresponding connectors of the electronic element.
The antenna is connected to the electronic element via connector pads through the holes utilizing a welding, gluing, clamping or crimping connecting technique. It may also be attached by way of a spring based mechanical connection.

A preferred method (not shown on Figures) for manufacturing the card according to the invention comprises the steps of :
- manufacturing the card body with at least one electronic module,
- drilling at least one hole in the card body back side to a controlled depth so as to liberate an access to the electronic module.

An alternative method (not represented on Figures) for manufacturing the card according to the invention comprises the steps of :
- manufacturing the card body with at least one electronic module, and at least one spacer positioned on the electronic module towards the card body back side,
- removing said spacers from the card body so as to define at least one hole liberating an access to the electronic module.

In the above described method for manufacturing the card, the electronic module means :
- either the assembly comprising the at least one electronic element 4 embedded in the card body 1, the contact area 5 connected to the electronic element through connector pads 6,
- or the assembly comprising the at least one electronic element 4 embedded in the card body 1, the contact area 5 connected to the electronic element through connector pads 6 and the metallic track 5' connected to the connector pads 6,
- or the assembly comprising the at least one electronic element 4 embedded in the card body 1, the contact area 5 connected to the electronic element through connector pads 6 and the metallic track 5' connected the contact area 5.

With the invention, it is possible to avoid a close proximity of the antenna and the electronic elements, and thus to limit interference between the antenna and the electronic elements. On a mechanical point of view, the card according to the invention is robust, in the sense that the antenna does not interfere between the contact area and the handset contacts. The invention is easy to implement and to manufacture. It is based on an existing product and just requires a couple of simple operations to be performed afterwards.

## Claims

1. Card of the dual interface type comprising :
- a card body (1) having a front side (2) and a back side (3),
- at least one electronic element (4) embedded in the card body (1),
- contact area (5) connected to said electronic element (4) through connector pads (6), said contact area (5) being even with card body front side (2) and the connector pads (6) being embedded in the card body (1),
wherein the card body back side (3) comprises at least one hole (7, 7', 7").

2. Card as recited in claim 1, wherein a metallic track (5') is connected to the connector pads (6) or the contact area (5).

3. Card as recited in claim 1, wherein the hole (7, 7', 7") liberates an access to the connector pads (6).

4. Card as recited in claim 2, wherein the hole (7, 7', 7") liberates an access to the metallic track (5').

5. Card as recited in claim 3, wherein an antenna (8, 12', 12") is connected to the electronic element (4) via connector pads (6) or contact area (5) through the hole (7, 7', 7").

6. Card as recited in claim 4, wherein an antenna (8, 12', 12") is connected to the electronic element (4) via metallic track (5') through the hole (7, 7', 7").

7. Card as recited in claim 5 or 6, wherein the antenna (8, 12', 12") is made of a conductive material laid on a flexible film (9, 10).

8. Card as recited in claim 7, wherein the flexible film is made of a thin plastic material.

9. Method for manufacturing a card as recited in claim 1, the method comprises the steps of :
- manufacturing the card body with at least one electronic module,
- drilling at least one hole in the card body back side to a controlled depth so as to liberate an access to the electronic module.

10. Method for manufacturing a card as recited in claim 1, the method comprises the steps of :
- manufacturing the card body with at least one electronic module, and at least one spacer positioned on the electronic module towards the card body back side,
- removing said spacers from the card body so as to define at least one hole liberating an access to the electronic module.

11. Method for manufacturing a card as recited in claim 9 or claim 10, wherein the method further comprises the step of connecting the antenna to the electronic module through the holes, said connecting step being carried out utilizing a connecting technique selected from the group consisting of welding, gluing, clamping or crimping.
